# EUROPÄISCHE PATENTSCHRIFT

(11) **EP 1 211 934 B1**
(45) Veröffentlichungstag und Bekanntmachung des Hinweises auf die Patenterteilung: **23.04.2003**
(21) Anmeldenummer: 00954577.3
(22) Anmeldetag: 28.07.2000
(51) Int. Cl.: A01N 25/08, A01N 25/10

(54) **HERBIZIDE MITTEL VON NACHAUFLAUF-HERBIZIDEN ZUR BODENAPPLIKATION**
HERBICIDAL AGENTS CONTAINING POST-EMERGENCE HERBICIDES FOR SOIL APPLICATION
PRODUITS CONTENANT DES HERBICIDES HABITUELLEMENT APPLIQUES EN POST-EMERGENCE DESTINES A DES APPLICATIONS AU SOL

(30) Priorität: 09.08.1999 DE 19936784
(43) Veröffentlichungstag der Anmeldung: 12.06.2002
(73) Patentinhaber: Bayer CropScience GmbH, 65929 Frankfurt/Main (DE)
(72) Erfinder: BICKERS, Udo, D-49835 Wietmarschen (DE); FRISCH, Gerhard, D-61273 Wehrheim (DE)
(86) Internationale Anmeldenummer: EP0007339
(87) Internationale Veröffentlichungsnummer: WO01010211

(56) Entgegenhaltungen:
- EP-A- 0 517 669
- WO-A-98/05205
- GB-A- 1 041 028
- US-A- 5 543 383
- US-A- 5 674 519

## Beschreibung

Die Erfindung betrifft das technische Gebiet der Herbizide, insbesondere das der Herbizide zur Bodenapplikation.

Zur Bekämpfung unerwünschter Schadpflanzen stehen dem Anwender eine Vielzahl von Herbiziden zur Verfügung, die, in Abhängigkeit von den biologischen Eigenschaften der Herbizide, der Art der zu bekämpfenden Schadpflanzen und der Art der Nutzpflanzen zum Einsatz gelangen können. Dabei muß auch berücksichtigt werden, daß zahlreiche Herbizide aufgrund des ihnen eigenen Wirkmechanismus entweder ausschließlich im Vorauflauf- oder im Nachauflauf-Verfahren eingesetzt werden können. Beide Verfahren und auch die dabei verwendeten Herbizide weisen bestimmte Vor- und Nachteile auf. Als Nachteile des Nachauflauf-Verfahrens, in dem auch blattwirksame Herbizide wie Bilanafos, Diquat, Glufosinate-Ammonium, Glyphosate und Paraquat zum Einsatz kommen, werden beispielsweise gesehen:
- Schädigung von Nutzpflanzen durch Überdosierung
- je nach Typ des eingesetzten Herbizids, der zu bekämpfenden Schadpflanzen und/oder der vorliegenden Nutzpflanzen eine mehrfach zu wiederholende Anwendung.
Insbesondere der letztgenannte Nachteil stellt sich gerade unter dem Gesichtspunkt der zeitökonomischen Bewirtschaftung als gravierend dar.

Andererseits weisen zahlreiche im Nachauflauf einzusetzende Herbizide bedeutende Vorteile auf, insbesondere auch in ökologischer Hinsicht, da sie vielfach günstigere toxikologische und ökotoxikologische Eigenschaften haben als die im Vorauflauf einsetzbaren Herbizide. Je nach konkreter Anwendungssituation wäre es daher in vielen Fällen für den Anwender wünschenswert, ein Nachauflauf-Herbizid unter den Bedingungen einer Vorauflauf-Anwendung, d.h. vor dem Auflaufen der Pflanzen, und gegebenenfalls zeitgleich mit der Aussaat der Nutzpflanzen einsetzen zu können. Jedoch ist eine solche Anwendung, insbesondere im Falle der blattwirksamen Herbizide, bislang nicht möglich, sei es aus Gründen des diesen Herbiziden zugrunde liegenden Wirkmechanismus, da sie beispielsweise als blattwirksame Herbizide in Form der bisher bekannten herbiziden Mitteln nur über güne Pflanzenteile aufgenommen werden, ihres Leaching-Verhaltens oder auch ihres Abbau-Verhaltens im Boden. So ist beispielsweise von dem als blattwirksames Herbizid einsetzbaren Glufosinate-Ammonium (2-Amino-4-(hydroxymethylphosphiny)butansäure) bekannt, daß es im Boden rasch zersetzt wird, so daß es keine herbizide Wirkung entfalten kann (G. Hoerlein in "Reviews of Environmental Contamination and Toxicology", Vol. 138, Springer-Verlag; "The Pesticide Manual", 11^{th} Edition, 1997, British Crop Protection Council). Von dem ebenfalls blattwirksamen Herbizid Glyphosat (N-(Phosphonomethyl)glycin) ist bekannt, daß es an Boden stark adsorbiert und darin abgebaut wird, so daß es nicht in ausreichendem Maße pflanzenverfügbar ist (L. Torstensson in "The Herbicide Glyphosate", Verlag Butterworths, S. 137-150).

Im Folgenden soll unter dem Begriff "Herbizid" je nach Zusammenhang der reine herbizide Wirkstoff oder der herbizide Wirkstoff in formulierter Form, d.h. das herbizide Mittel verstanden werden. Die Begriffe "Vorauflauf" und "Nachauflauf' sind hier in Bezug auf den Zeitpunkt des Auflaufens der Schadpflanzen zu verstehen, d.h. eine Behandlung im Vorauflauf-Verfahren bedeutet eine Behandlung mit einem Herbizid zeitlich vor Auflaufen der Schadpflanzen und somit vor der Ausbildung grüner Pflanzenteile. Analog bedeutet eine Behandlung im Nachauflauf-Verfahren eine Behandlung mit einem Herbizid zeitlich nach Auflaufen der Schadpflanzen.

Auf dem Gebiet des Pflanzenschutzes, so auch auf dem Gebiet der Bekämpfung von Schadpflanzen, gibt es immer wieder Versuche die Anwendungseigenschaften eines gegebenen Wirkstoffs, wie z.B. seine Wirkungsbreite, Wirkungsdauer oder notwendige Aufwandmenge beispielsweise durch modifizierte Formulierungen oder Applikationsmethoden günstig zu beeinflussen. So wird in Weed Research, 1997, **37**, 19-26 untersucht, ob durch eine sogenannte "controlled-release" Formulierung die Wirksamkeit des Herbizids Chlorsulfuron gesteigert und dessen Neigung zum Leaching vermindert werden kann. Aus US 5,674,519 ist bekannt, daß die Eigenschaft bestimmter Pflanzenschutzmittel, auch die von Herbiziden, im Boden zum Leaching zu neigen, durch eine Formulierung, in der die Wirkstoffe mikroverkapselt vorliegen, vermindert werden kann. Auch in WO 98/05205 und US 5,543,383 wird eine besondere Form der Verkapselung von Pflanzenschutzmitteln beschrieben, die zu einer Steigerung der Wirksamkeit und zu einer verminderten Empfindlichkeit gegenüber Auswaschung durch Regen führt. Weiterhin werden in WO 99/26474 Verfahren zur Abgabe von Wirkstoffen unter Nutzung von Cyclodextrinen bzw Carbohydraten beschrieben. EP-A 0 517 669 offenbart, daß das Leaching-Verhalten von Agrochemikalien durch Mikroverkapselung in Polyester-Polymeren verbessert werden kann. GB-A 1 041 028 nennt Mischungen aus Paraquat-Salzen und Fullers Erde mit antikokzidialen Eigenschaften.
In keiner der genannten Schriften wird jedoch auf eine Möglichkeit hingewiesen, Nachauflauf-Herbizide durch geeignete Maßnahmen im Vorauflauf anzuwenden.

Aufgabe der vorliegenden Erfindung ist es daher, die Anwendung von Nachauflauf-Herbiziden im Vorauflauf zu ermöglichen. Eine Lösung der Aufgabe sind herbizide Mittel, gekennzeichnet durch einen wirksamen Gehalt eines oder mehrerer Nachauflauf-Herbizide und durch einen Gehalt eines Trägermaterials aus der Gruppe Fullers Erde, Aerogele, hochmolekulare Polyglykole und Polymerisate auf Basis von Acrylsäure, Methacrylsäure und deren Copolymerisate, wobei herbizide Mittel enthaltend Paraquat und Fullers Erde ausgenommen sein sollen.

Dabei sollen die erfindungsgemäßen Mittel nur solche Nachauflauf-Herbizide enthalten, die in Form der bisher bekannten herbiziden Mittel ausschließlich im Nachauflaufverfahren, d.h. nach dem Auflaufen der unerwünschten Schadpflanzen anwendbar sind.

Nachauflauf-Herbizide, die auf den oben genannten Trägermateralien gebunden vorliegen, entfalten überraschenderweise eine herbizide Wirkung gegen unerwünschte Schadpflanzen im Vorauflauf, d.h. wenn die herbiziden Mittel vor dem Auflaufen der Schadpflanzen appliziert worden sind.

Üblicherweise enthalten die erfindungsgemäßen Mittel
a) 0,001 bis 48 Gew.-% eines oder mehrerer Nachauflauf-Herbizide,
b) 2 bis 90 Gew.-% eines Trägermaterials und
c) 0 bis 97 Gew.-% eines Lösungsmittels.

Besonders geeignete Nachauflauf-Herbizide sind diejenigen aus der Gruppe der blattwirksamen Herbizide. Bevorzugt sind Herbizide aus der Gruppe Bilanafos, Diquat, Glufosinate-Ammonium, Glyphosate und Paraquat. Besonders bevorzugt ist Glufosinate-Ammonium. Die vorstehend genannten Herbizide sind beispielsweise bekannt aus "The Pesticide Manual", 11^{th} Edition, 1997, British Crop Protection Council. Die betreffenden Herbizide können dabei selbstverständlich auch in der handelsüblichen Salzform, wie sie beispielsweise aus "The Pesticide Manual" bekannt sind, eingesetzt werden.

Ein Vorteil der erfindungsgemäßen Mittel besteht auch darin, daß sie in fester Form vorliegen und beispielsweise in Form eines Granulats verwendet werden können. Der Anwender kann diese feste Darreichungsform direkt, d.h. ohne eine Spritzbrühe herstellen zu müssen, auf die zu behandelnde Fläche ausbringen. Dazu werden sie in Abhängigkeit von der Art der Nutzpflanzen und der Art der erwartungsgemäß zu bekämpfenden Schadpflanzen auf den zu behandelnden Boden ausgebracht, in ihn eingearbeitet, oder durch eine Unterfußausbringung appliziert wird.
Unterfußausbringung bedeutet dabei, daß das Herbizid im Boden unterhalb des Saatgutes gebracht wird. Besonders vorteilhaft ist dabei, daß das Ausbringen der herbiziden Mittel auch in einem Arbeitsgang mit der Aussaat der Kulturpflanzen erfolgen kann, was eine geringere mechanische Bodenbelastung zur Folge hat.

Die für die erfindungsgemäßen Mittel einsetzbaren Herbizide können in Form des reinen Wirkstoffs oder auch in der üblichen, kommerziell angebotenen Formulierung zusammen mit Trägermaterialien und gegebenenfalls zusätzlichen Stoffen in weiter unten beschriebener Art zu den erfindungsgemäßen Mitteln verarbeitet werden. Ein besonderer Vorteil der erfindungsgemäßen Mittel besteht in der guten Umweltverträglichkeit: Da die Herbizide im Gegensatz zu den herkömmlichen Applikationsverfahren nicht in flüssiger Form versprüht, sondern in fester Form ausgebracht werden, besteht nicht die Gefahr des unkontrollierten Abdrifts von Sprühnebeln auf den Anwender und auf benachbarte Flächen und Pflanzen. Darüberhinaus finden umweltverträgliche Formulierungshilfsstoffe Verwendung, da diese entweder - wie die hochmolekularen Polyglykole, Polymerisate von Acrylsäure, Methacrylsäure und deren Copolymerisaten - biologisch zu unbedenklichen Stoffen abbaubar sind, oder - wie Fullers Erde - ein umweltneutrales Verhalten zeigen.

Die Herstellung der herbiziden Mittel erfolgt durch Vermischen der jeweiligen Wirkstoffe, Trägermaterialien und gegebenenfalls weiterer Zusatzstoffe gemäß dem Fachmann bekannten Methoden. Granulate können beispielsweise nach den in EP-A 0 413 267 beschriebenen Methoden hergestellt werden. Je nach Trägermaterial können die jeweiligen Stoffe in fester oder flüssiger beziehungsweise gelöster Form vorliegen. Im Falle der Herstellung von Granulaten ist es von Vorteil, die aufzunehmenden Wirk- und Zusatzstoffe in flüssiger bzw. gelöster Form vorliegen zu haben. Dabei können diese Stoffe in bekannter Weise durch z.B. Sprühen, Gießen, Tröpfeln, Behandlung im Wirbelbett, Betonmischer, Taumelmischer etc. gleichmäßig aufgebracht werden. Es besteht auch die Möglichkeit, diese Trägermaterialien mit Lösungen der betreffenden Wirk- und Zusatzstoffe zu übersättigen, um beispielsweise Gele zu bilden oder das überschüssige Wasser durch Trocknen zu entfernen. Im Falle der Herstellung von Schmelzgranulaten wie z.B. auf Polyethylglykolbasis werden Wirk- und Zusatzstoffe vorzugsweise in fester Form eingearbeitet und extrudiert. Weiterhin besteht die Möglichkeit der Tablettierung, der Perletierung, der Herstellung von Schuppen, sowie der Zerkleinerung zu Pulver durch Brechen oder Vermahlung. Für alle Herstellungsverfahren können als Nachbehandlung eine Zerkleinerung stattfinden. Ebenso können Feinstgranulate mittels geeigneten Klebern kompaktiert werden, um Staubbildung zu vermeiden. Weiterhin können gegebenenfalls Zusätze hinzugefügt werden, um beispielsweise eine Verbesserung der Rieselfähigkeit des Granulats zu erhalten oder deren Benetzbarkeit zu verbessern.

Je nach Anwendungszweck können die herbiziden Mittel zusätzlich auch andere im Pflanzenschutz einsetzbare Stoffe, wie Vorauflauf-Herbizide, Pflanzenwachstumsregulatoren, Fungizide, Insektizide, Safener (Antidots, herbizide Gegenmittel), Nährstoffe, Konservierungsmittel, Saatgutbehandlungsmittel und Düngemittel enthalten. Die Auswahl der gegebenenfalls zuzusetzenden Vorauflauf-Herbizide, Pflanzenwachstumsregulatoren, Fungizide, Insektizide und Saatgutbehandlungsmittel richtet sich nach Art der Nutzpflanzen und der Art der erwartungsgemäß zu bekämpfenden Schadpflanzen, Pilze, Insekten und Fraßschädlinge. Grundsätzlich können dabei alle handelsüblichen und üblicherweise im Pflanzenschutz einsetzbaren Stoffe verwendet werden. Als Nährstoffe und Düngemittel eignen sich insbesondere wässrige Ammoniumnitrat-Harnstofflösungen und NPK-Lösungen wie 12-6-8, 8-8-6, 5-8-10, sowie Ammonsulfat und/oder Ammoniumnitrat-Lösungen.

Bevorzugte Trägermaterialien sind Aerogele, Polymerisate auf Basis von Acrylsäure, Methacrylsäure und deren Copolymerisate sowie hochmolekulare Polyglykole.

Bei der Anwendung der erfindungsgemäßen Mittel ist darauf zu achten, daß die Nutzpflanze gegen das verwendete Herbizid ausreichend tolerant ist. Dazu zählen neben Nutzpflanzen, bei denen durch gezielte gentechnische Eingriffe eine ausreichende Toleranz gegen Herbizide erzielt wurde, auch solche, die, wie beispielsweise Gerste, auch ohne gentechnische Eingriffe Toleranzen gegenüber manchen Herbiziden aufweisen. Die erfindungsgemäßen Mittel sind besonders vorteilhaft in Kulturen von Nutzpflanzen aus der Gruppe, Getreide, Mais, Soja und Raps anwendbar. Bevorzugt sind sie in solchen anwendbar, die durch gentechnische Eingriffe ausreichend tolerant gegen das betreffende Herbizid sind.

Wie bei anderen herbiziden Mitteln ist es auch bei den erfindungsgemäßen Mitteln selbstverständlich möglich und unter Umständen vorteilhaft, das Herbizid mit Zusatzstoffen, wie Tenside, Netzmittel, Emulgatoren, Adjuvantien, Ammoniumsalze, Konservierungsmittel, Farbstoffe, Entschäumer, Klebstoffe, Lösungsmittel, Puffersysteme und UV-Stabilisatoren zu versehen. Je nach Art und Zweck der Zusatzstoffe können diese bereits zusammen mit dem Herbizid in einer Formulierung verarbeitet oder auch getrennt von diesem vorliegen und dann verwendet werden. Diese Zusatzstoffe dienen der Verbesserung der anwendungstechnischen Eigenschaften. Die Verwendung solcher Zusatzstoffe kann vorteilhaft sein, um beispielsweise die Wirkungsdauer des Herbizids zu verlängern. Konservierungsmittel dienen dazu, um beispielsweise den biologischen Abbau von Wirkstoffen und/oder Formulierungshilfsmitteln zu verlangsamen.

Geeignete Tenside sind beispielsweise Kondensationsprodukte aus Formaldehyd und Phenol und/oderNaphthol jeweils mit und ohne Natriumbisulfit wie Tamol® NNO der Fa. BASF, Rapidamin-Reserve® C der Fa. Clariant oder Galoryl® MT800 bzw. DT201 der Fa. CFPI; C₁₂₋C₂₄-Fettalkohole mit 2 bis 40 EO und/oder PO, gegebenenfalls phosphatiert und/oder mit Alkanollamin oder Alkali beziehungsweise Ammoniak neutralisiert; Di- und Tristyrylphenylanaloge der oben genannten Fettalkohole wie z.B. die Genapol®-Reihen der Fa. Clariant, Grafol® Typen der Fa. Henkel und Soprophor® Typen der Fa. Rhodia; Alkylethersulfate wie Genapol LRO® der Fa. Clariant; Alkyl- und /oder Alkenylsulfonate wie Hostapul® OS der Fa. Clariant, Ligninsulfonate wie Ufoxane® 3A und Vanisperse® CB der Fa. Booregard; Reax® Typen der Fa. Westvaco; N-Methyltauride wie Hostapon® T der Fa. Clariant; Sulfobemsteinsäurehalbestersalz wie Hoe S 1728® der Fa. Clariant; Alkylpolysaccharide wie Plantaren® APG 600 der Fa. Henkel; Ethoxylierte C₁₂-C₂₄-Fettamine wie die Genamin®-Typen der Fa. Clariant. Als Lösungsmittel eignen sich je nach Verwendungszweck Alkohole, Diole, Polyole, N-substituierte Pyrrolidone, Ketone, Aldehyde, Ether, Polyether, Paraffine, Aromaten, Heteroaromaten, Cycloalkanone, Dimethylsulfoxid, Tetrahydrofuran und Wasser. Vorteilhaft wird Wasser verwendet.

Als Konservierungsmittel kommen beispielsweise in Frage Bronidox® L der Fa. Henkel, Mergal®-Typen der Fa. Riedel de Haen, Proxel® der Fa. ICI, Ascorbinsäurederivate, Benzoesäurederivate, Formaldehyd, Citronensäure, Konservierungsmittel aus der Kathon® Reihe der Fa. Rohm & Haas und Bromopol® der Fa. BASF.

Als Adjuvantien kommen z.B. Alkylpolysaccharide oder Laurylethersulfate in Frage.

Als Trägermaterial aus der Gruppe der hochmolekularen Polyglykole eignen sich besonders die Polyethylenglykole mit einem Molgewicht von 2000 bis 40000 (PEG 2000 bis PEG 40000). Als Trägermaterial aus der Gruppe der Aerogele eignen sich besonders solche Aerogele, wie sie in EP-A 0 171 722 beschrieben sind.

Besonders vorteilhaft ist der Zusatz eines Stoffes wie Ammoniumsulfat, Ammoniumnitrat und eines der oben aufgeführten Tenside, insbesondere ein Tensid aus der Gruppe der Alkylethersulfate.

Die Verwendung der herbiziden Mittel im Vorauflauf ist neu und ebenfalls Gegenstand der Erfindung.

Mit den erfindungsgemäßen herbiziden Mitteln lassen sich unerwünschte Schadpflanzen im Vorauflauf-Verfahren bekämpfen. Dieses Verfahren ist neu und ebenfalls Gegenstand der Erfindung.

Die nachfolgenden Ausführungsbeispiele erläutern die Erfindung.

### A. Formulierungsbeispiele

In den Tabellen 1 bis 4 sind exemplarisch zahlreiche erfindungsgemäße herbizide Mittel in ihrer qualitativen und quantitativen (in Gew.-%) Zusammensetzung aufgeführt.

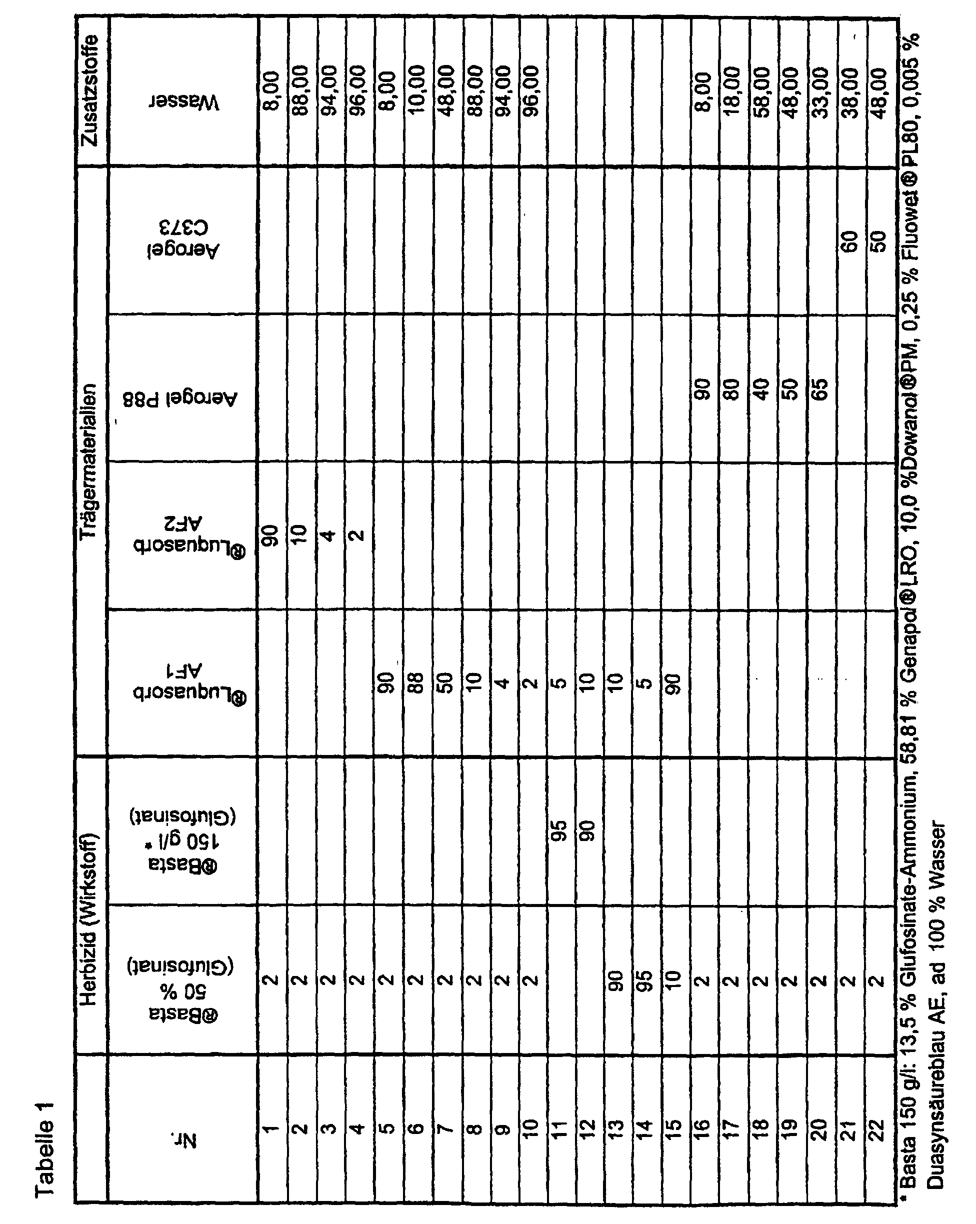

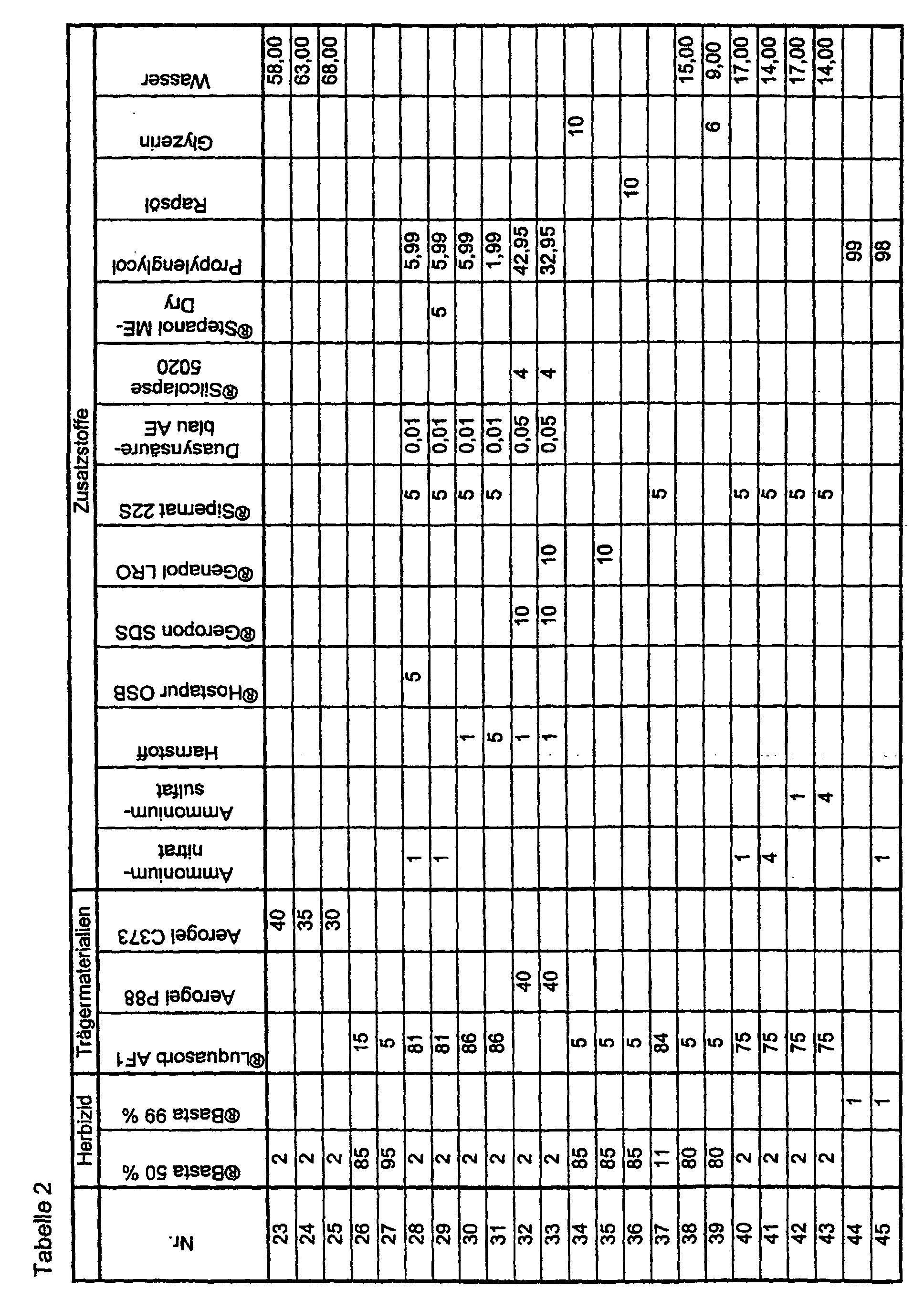

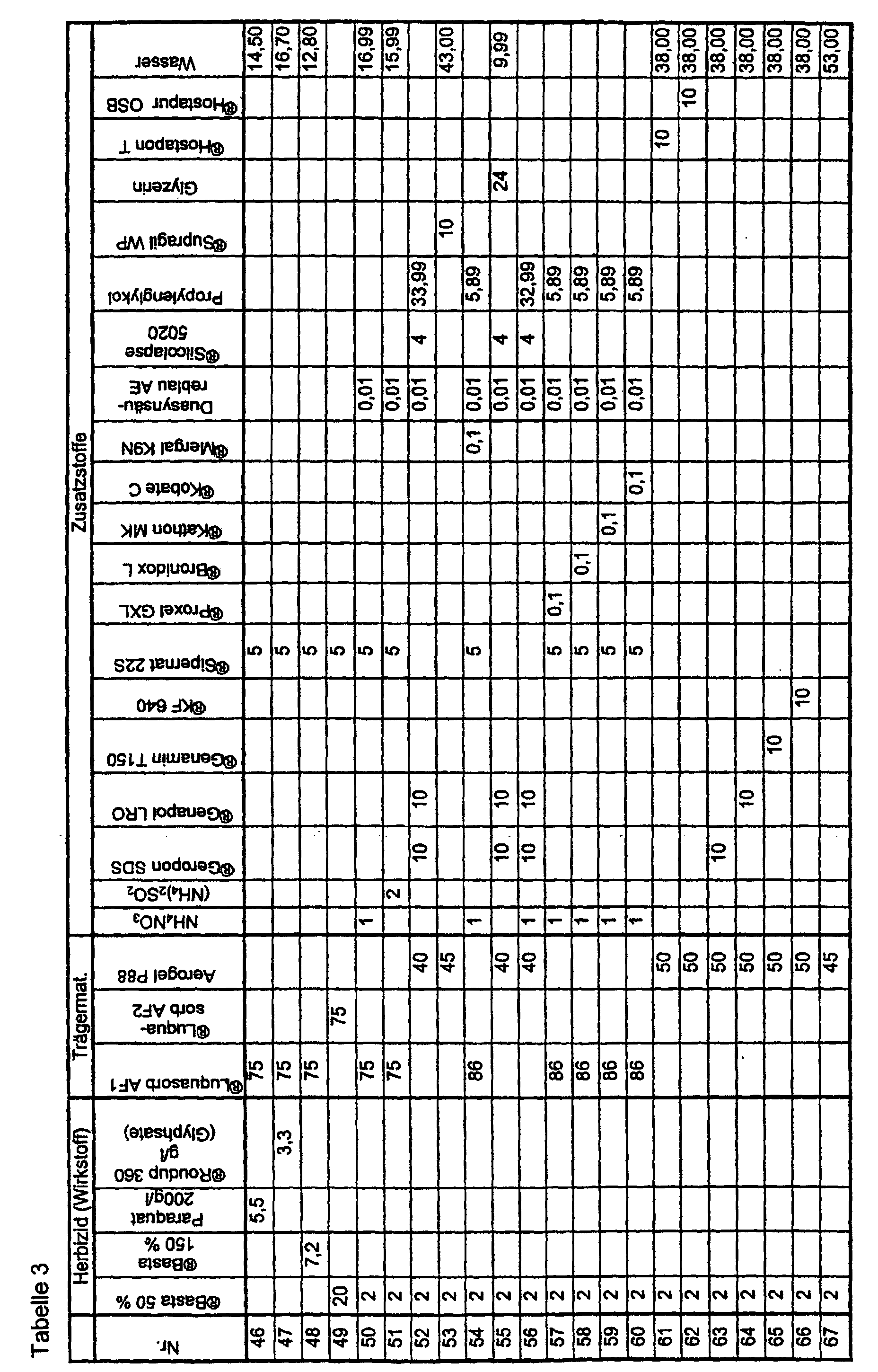

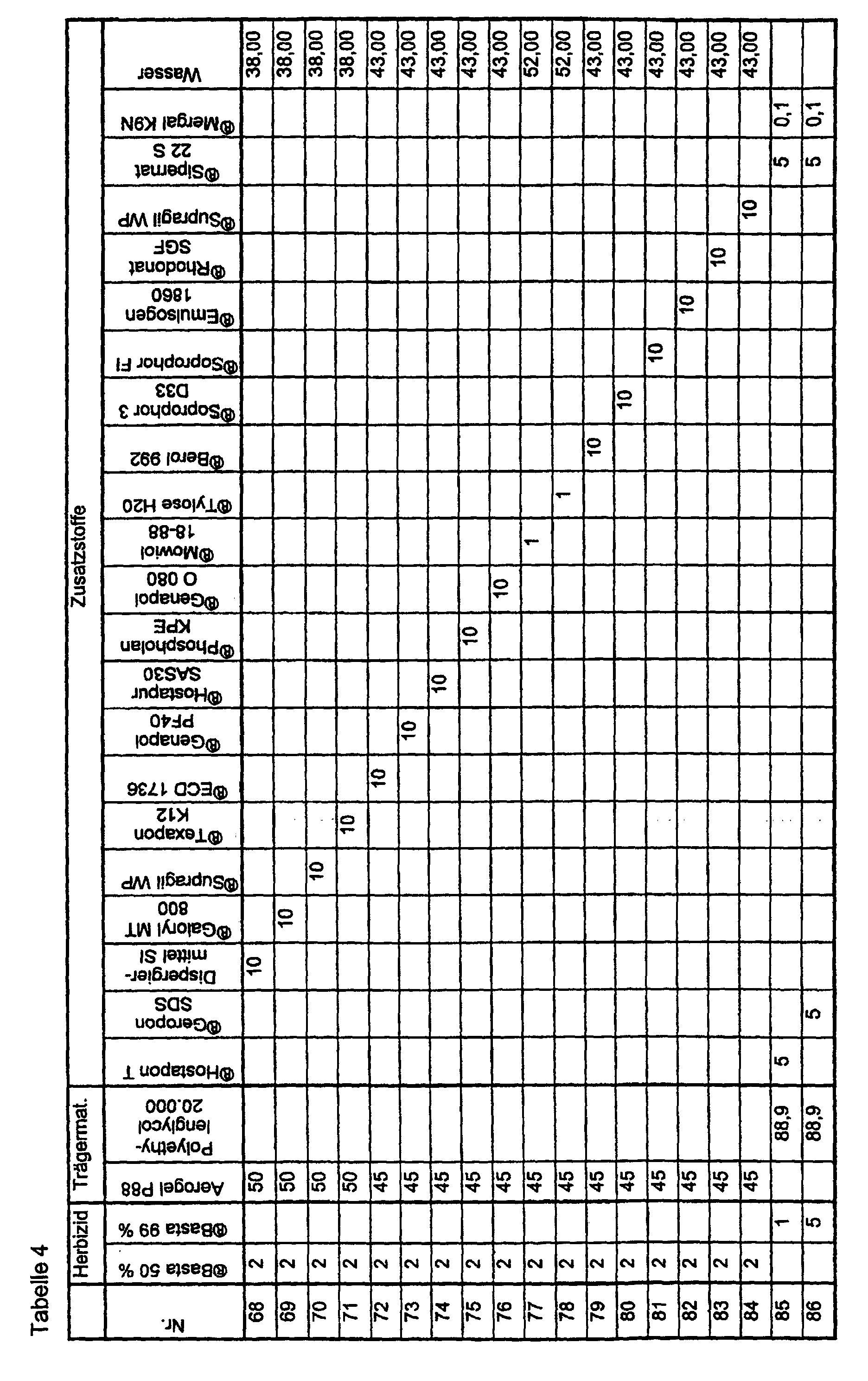

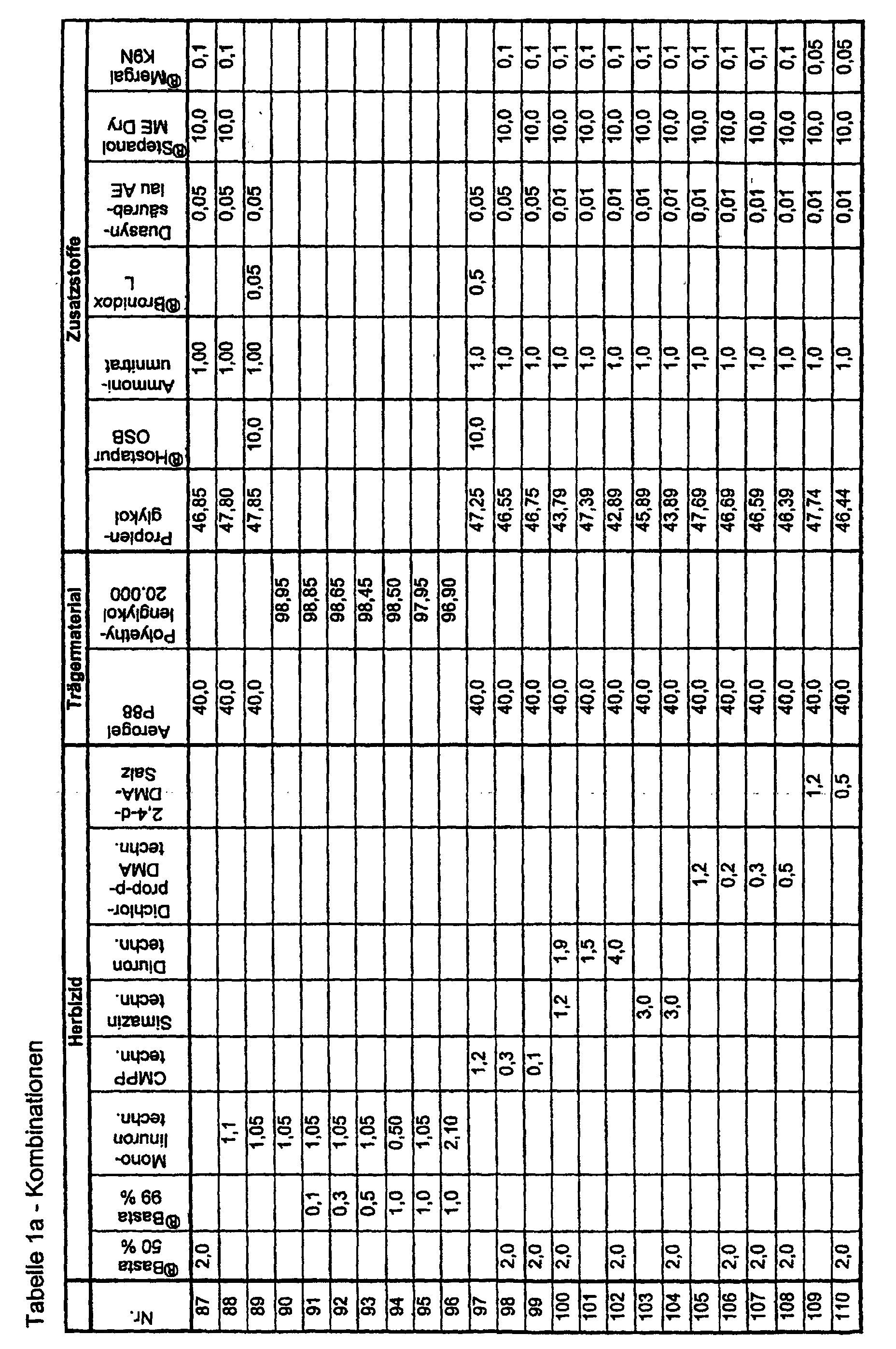

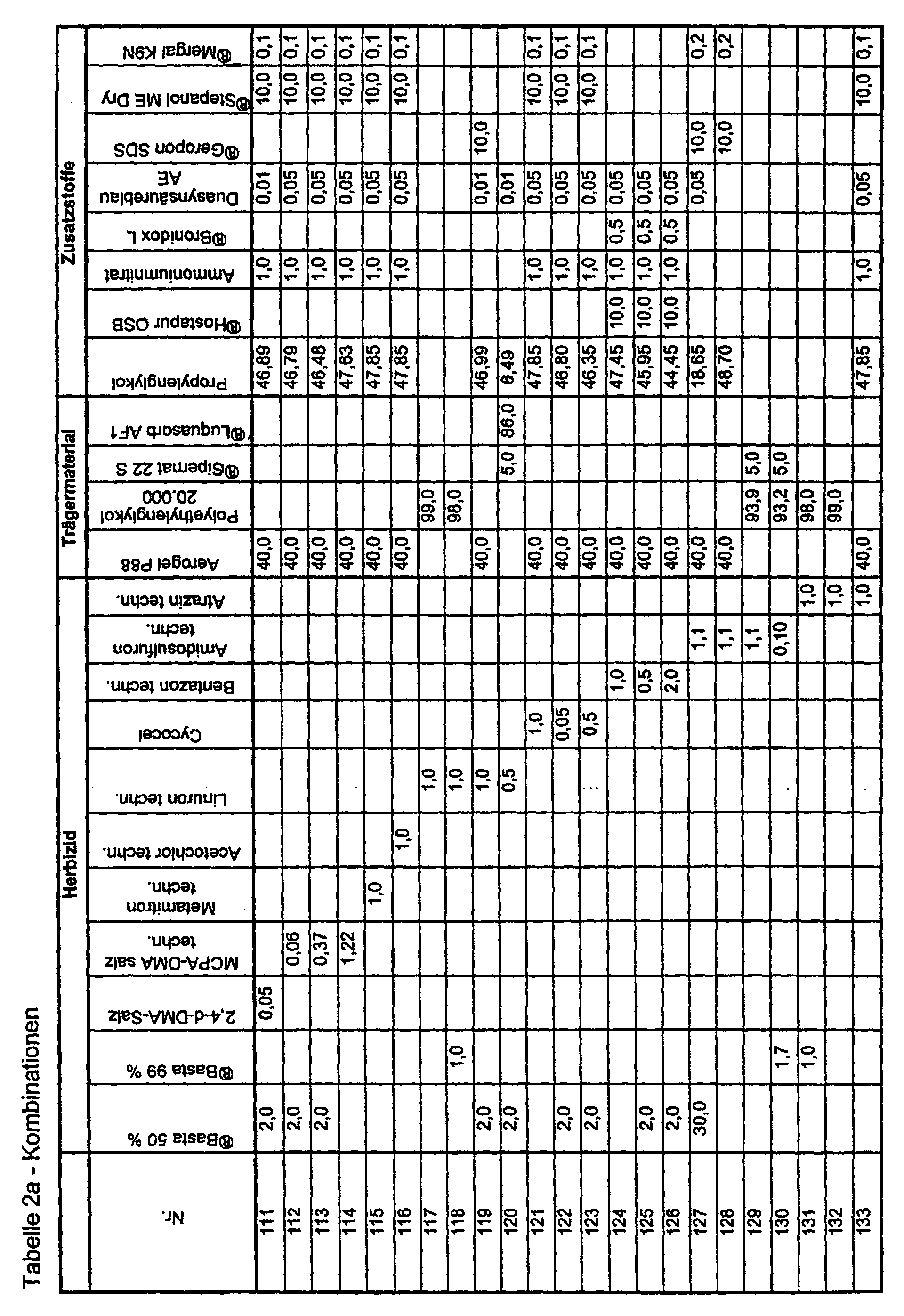

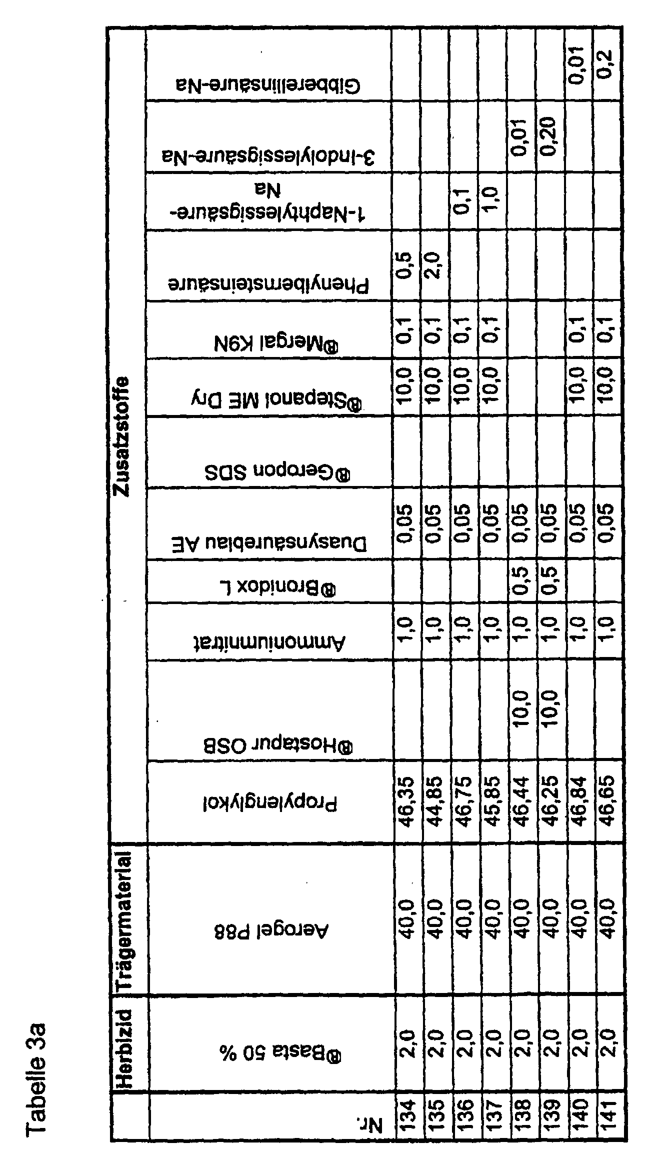

### B. Biologische Beispiele

Die nachfolgend verwendeten Abkürzungen bedeuten:

| | | | |
|---|---|---|---|
| ABUTH | Abutilon theophrasti | AMARE | Amaranthus retroflexus |
| BRSNW | Brassica napus | CHEAL | Chenopodium album |
| GALAP | Galium aparine | HORVS | Hordeum vulgare |
| LOLMU | Lolium multiflorum | | |

### B.1 Wirkung gegen Schadpflanzen von an Polymerisat als Trägermaterial gebundenem Glufosinate-Ammonium gegenüber der von konventionell appliziertem Glufosinate-Ammonium

In einem Gewächshaus wurde ein humoser Lehmboden mit einer gemäß Beispiel 48 hergestellten Granulat-Formulierung des Herbizids Glufosinate-Ammonium in einer Aufwandmenge von umgerechnet 500 g Wirkstoff pro Hektar bestreut und anschließend bewässert. Drei Tage nach der Applikation wurden in einer Tiefe von einem Zentimeter Samen von Setaria viridis ausgebracht. Während der gesamten Versuchsdauer wurde eine Tagestemperatur von 22 bis 24°C und eine Nachttemperatur von 16 bis 18° C eingehalten, wobei durch eine Zusatzbeleuchtung mit Natriumdampfleuchten (ca. 7000 lx) eine einheitliche Tageslänge von 16 Stunden erreicht wurde. Die relative Luftfeuchtigkeit betrug 60 bis 80%. Eine optische Bonitur 35 Tage nach der Aussaat ergab, daß eine 70%ige Wirkung gegen Setaria viridis erzielt wurde. Zum Vergleich wurde Glufosinate-Ammonium als wässrige Lösung unter ansonsten gleichen Bedingungen und ebenfalls mit einer Aufwandmenge von umgerechnet 500 g Wirkstoff pro Hektar ausgebracht. Die optische Bonitur 35 Tage nach der Aussaat ergab, daß keine (0%) Wirkung gegen Setaria viridis erzielt wurde.

### B.2 Vergleich der Wirkung gegen Schad- und Nutzpflanzen von an Polymerisat als Trägermaterial gebundenem Glufosinate-Ammonium

Samen der Schadpflanzen LOLMU, AMARE und CHEAL und der Nutzpflanze HORVS wurden in einem Gewächshaus auf einem humosen Lehmboden ausgebracht und mit einer 0,5 cm hohen Schicht des gleichen Bodens bedeckt und anschließend bewässert. Einen Tag nach der Aussaat wurde der Boden mit einer gemäß Beispiel 48 hergestellten Formulierung des Herbizids Glufosinate-Ammonium in einer Aufwandmenge von umgerechnet 1000 g Wirkstoff pro Hektar bestreut. Während der gesamten Versuchsdauer wurde eine Tagestemperatur von 22 bis 24°C und eine Nachttemperatur von 16 bis 18° C eingehalten, wobei durch eine Zusatzbeleuchtung mit Natriumdampfleuchten (ca. 7000 Ix) eine einheitliche Tageslänge von 16 Stunden erreicht wurde. Die relative Luftfeuchtigkeit betrug 60 bis 80%. Die optische Bonitur 35 Tage nach der Aussaat ergab die in Tabelle 5 aufgeführten Resultate, wobei sich zeigte,daß im Gegensatz zu den drei getesteten Schadpflanzen die Kulturpflanze HORVS nicht durch das Herbizid geschädigt wurde.

**Tabelle 5**

| Wirkung [%] gegen Schad- und Nutzpflanzen | | | | |
|---|---|---|---|---|
| Behandlung mit Herbizid gemäß Formulierungsbeispiel Nr. | LOLMU | AMARE | CHEAL | HORVS |
| 48 | 40 | 70 | 60 | 0 |

### B.3 Wirkung gegen Schadpflanzen von an verschiedenen Trägermaterialien gebundenem Glufosinate-Ammonium

Samen der Schadpflanzen GALAP, AMARE, CHEAL und LOLMU wurden im Freiland auf einen humosen Lehmboden ausgebracht und mit einer 0,5 cm hohen Schicht des gleichen Bodens bedeckt und anschließend bewässert. Einen Tag nach der Aussaat wurde der Boden mit gemäß Beispielen Nr. 40, 45 und 56 hergestellten Formulierungen des Herbizids Glufosinate-Ammonium in einer Aufwandmenge von umgerechnet 750 g Wirkstoff pro Hektar bestreut. 35 Tage nach der Aussaat ergab die optische Bonitur die in Tabelle 6 aufgeführten Resultate.

**Tabelle 6**

| Wirkung [%] gegen Schadpflanzen | | | | |
|---|---|---|---|---|
| Behandlung mit Herbizid gemäß Formulierungsbeispiel Nr. | GALAP | AMARE | CHEAL | LOLMU |
| 40 | 80 | 10 | 15 | 25 |
| 45 | 100 | 35 | 70 | 30 |
| 56 | 70 | 40 | 85 | 25 |

### B.4 Einfluß verschiedener Düngemittel auf die Wirksamkeit von an Polymerisat als Trägermaterial gebundenem Glufosinate-Ammonium

Samen der Schadpflanzen ABUTH, AMARE, CHEAL und LOLMU wurden in einem Gewächshaus auf einem humosen Lehmboden ausgebracht und mit einer 0,5 cm hohen Schicht des gleichen Bodens bedeckt und anschließend bewässert. Einen Tag nach der Aussaat wurde der Boden mit einer gemäß Beispielen 41 und 43 hergestellten Formulierung des Herbizids Glufosinate-Ammonium in einer Aufwandmenge von umgerechnet 750 g Wirkstoff pro Hektar bestreut. Während der gesamten Versuchsdauer wurde eine Tagestemperatur von 22 bis 24°C und eine Nachttemperatur von 16 bis 18° C eingehalten, wobei durch eine Zusatzbeleuchtung mit Natriumdampfleuchten (ca. 7000 lx) eine einheitliche Tageslänge von 16 Stunden erreicht wurde. Die relative Luftfeuchtigkeit betrug 60 bis 80%. 35 Tage nach der Aussaat ergab die optische Bonitur die in Tabelle 7 aufgeführten Resultate.

**Tabelle 7**

| Wirkung [%] gegen Schadpflanzen | | | | |
|---|---|---|---|---|
| Behandlung mit Herbizid gemäß Formulierungsbeispiel Nr. | ABUTH | AMARE | CHEAL | LOLMU |
| 41 | 80 | 90 | 85 | 15 |
| 43 | 75 | 75 | 75 | 10 |

### B.5 Einfluß verschiedener Tenside auf die Wirksamkeit von an Trägermaterialien gebundenem Glufosinate-Ammonium

Samen der Schadpflanzen GALAP, AMARE, CHEAL und LOLMU wurden in einem Gewächshaus auf einem humosen Lehmboden ausgebracht und mit einer 0,5 cm hohen Schicht des gleichen Bodens bedeckt und anschließend bewässert. Einen Tag nach der Aussaat wurde der Boden mit einer gemäß Beispielen 40, 29 und 28 hergestellten Formulierung des Herbizids Glufosinate-Ammonium in einer Aufwandmenge von umgerechnet 750 g Wirkstoff pro Hektar bestreut. Während der gesamten Versuchsdauer wurde eine Tagestemperatur von 22 bis 24°C und eine Nachttemperatur von 16 bis 18° C eingehalten, wobei durch eine Zusatzbeleuchtung mit Natriumdampfleuchten (ca. 7000 lx) eine einheitliche Tageslänge von 16 Stunden erreicht wurde. Die relative Luftfeuchtigkeit betrug 60 bis 80%. 35 Tage nach der Aussaat ergab die optische Bonitur, daß durch den Zusatz von Tensiden zu an Trägermaterialien gebundenem Glufosinate-Ammonium die Wirkungstärke des Herbizids gesteigert wird, s. Tabelle 8.

**Tabelle 8**

| Wirkung [%] gegen Schadpflanzen | | | | |
|---|---|---|---|---|
| Behandlung mit Herbizid gemäß Formulierungsbeispiel Nr. | GALAP | AMARE | CHEAL | LOLMU |
| 40 (ohne Tensid) | 80 | 10 | 15 | 25 |
| 28 (mit Tensid) | 98 | 60 | 98 | 60 |
| 29 (mit Tensid) | 90 | 60 | 90 | 40 |

### B.6 Einfluß von Konservierungsmitteln auf die Wirksamkeit von an Polymerisat als Trägermaterial gebundenem Glufosinate-Ammonium

Samen der Schadpflanzen ABUTH und BRSNW wurden in einem Gewächshaus auf einem humosen Lehmboden ausgebracht und mit einer 0,5 cm hohen Schicht des gleichen Bodens bedeckt und anschließend bewässert. Einen Tag nach der Aussaat wurde der Boden mit einer gemäß Beispielen 40, 54 und 60 hergestellten Formulierung des Herbizids Glufosinate-Ammonium in einer Aufwandmenge von umgerechnet 750 g Wirkstoff pro Hektar bestreut. Während der gesamten Versuchsdauer wurde eine Tages-temperatur von 22 bis 24°C und eine Nachttemperatur von 16 bis 18° C eingehalten, wobei durch eine Zusatzbeleuchtung mit Natriumdampfleuchten (ca. 7000 Ix) eine einheitliche Tageslänge von 16 Stunden erreicht wurde. Die relative Luftfeuchtigkeit betrug 60 bis 80%. 35 Tage nach der Aussaat ergab die optische Bonitur, daß durch den Zusatz von Konservierungsmitteln zu an Trägermaterialien gebundenem Glufosinate-Ammonium die Wirkungstärke des Herbizids gesteigert wird, s. Tabelle 9.

**Tabelle 9**

| Wirkung [%] gegen Schadpflanzen | | |
|---|---|---|
| Behandlung mit Herbizid gemäß Formulierungs-beispiel Nr. | ABUTH | BRSNW |
| 40 (ohne Konservierungsmittel) | 30 | 0 |
| 54 (mit Konservierungsmittel) | 55 | 10 |
| 60 (mit Konservierungsmittel) | 55 | 70 |

## Patentansprüche

1. Herbizide Mittel, **gekennzeichnet durch** einen wirksamen Gehalt eines oder mehrerer Nachauflauf-Herbizide und **durch** einen Gehalt eines Trägermaterials aus der Gruppe Fullers Erde, Aerogele, hochmolekulare Polyglykole und Polymerisate auf Basis von Acrylsäure, Methacrylsäure und deren Copolymerisate, wobei herbizide Mittel enthaltend Paraquat und Fullers Erde ausgenommen sein sollen.

2. Herbizide Mittel nach Anspruch 1, **dadurch gekennzeichnet, daß** sie
a) 0,15 bis 48 Gew.-% eines oder mehrerer Herbizide,
b) 2 bis 90 Gew.-% eines Trägermaterials und
c) 0 bis 97 Gew.-% eines Lösungsmittels enthalten.

3. Herbizide Mittel nach Anspruch 1 oder 2, **dadurch gekennzeichnet, daß** die Herbizid aus der Gruppe der blattwirksamen Herbizide stammen.

4. Herbizide Mittel einem der Ansprüche 1 bis 3, **dadurch gekennzeichnet, daß** die Herbizide aus der Gruppe Bilanafos, Diquat, Glufosinate-Ammonium, Glyphosate und Paraquat stammen.

5. Herbizide Mittel nach einem der Ansprüche 1 bis 4, **dadurch gekennzeichnet, daß** das Herbizid Glufosinate-Ammonium ist.

6. Herbizide Mittel nach einem der Ansprüche 1 bis 5, **dadurch gekennzeichnet, daß** die Trägermaterialien aus der Gruppe Aerogele, hochmolekulare Polyglykole und Polymerisate auf Basis von Acrylsäure, Methacrylsäure und deren Copolymerisate stammen.

7. Herbizide Mittel nach einem der Ansprüche 1 bis 6, **dadurch gekennzeichnet, daß** noch mindestens ein Stoff aus der Gruppe der Vorauflauf-Herbizide, Pflanzenwachstumsregulatoren, Fungizide, Insektizide, Safener, Nährstoffe, Saatgutbehandlungsmittel und Düngemittel enthalten ist.

8. Herbizide Mittel nach einem der Ansprüche 1 bis 7, **dadurch gekennzeichnet, daß** noch mindestens ein Zusatzstoff aus der Gruppe Tenside, Netzmittel, Emutgatoren, Adjuvantien, Ammoniumsalze, Konservierungsmittel, Farbstoffe, Entschäumer, Klebstoffe, Lösungsmittel, Puffersysteme und UV-Stabilisatoren enthalten ist.

9. Herbizide Mittel nach Anspruch 8, **dadurch gekennzeichnet, daß** der Zusatzstoff aus der Gruppe Genapol LRO®, Ammoniumsulfat und Ammoniumnitrat stammt.

10. Verwendung herbizider Mittel nach einem der Ansprüche 1 bis 9 zur Bekämpfung unerwünschter Schadpflanzen, **dadurch gekennzeichnet, daß** die Mittel im Vorauflauf eingesetzt werden.

11. Verwendung herbizider Mittel nach Anspruch 10, **dadurch gekennzeichnet, daß** die Mittel in Kulturen von Nutzpflanzen angewendet werden, die gegenüber den in den Mittel enthaltenden herbiziden Wirkstoffen tolerant sind.

12. Verwendung herbizider Mittel nach Anspruch 11, **dadurch gekennzeichnet, daß** die Mittel in Kulturen von gentechnisch veränderten Nutzpflanzen angewendet werden.

13. Verfahren zur Bekämpfung unerwünschter Schadpflanzen, **dadurch gekennzeichnet, daß** Nachauflauf-Herbizide in Form eines herbiziden Mittels nach einem der Ansprüche 1 bis 9 im Vorauflauf verwendet werden.

## Claims

1. A herbicidal composition, comprising an effective amount of one or more post-emergence herbicides and an amount of a carrier material selected from the group consisting of fullers earth, aerogels, high-molecular-weight polyglycols and polymers based on acrylic acid, methacrylic acid and copolymers thereof, with the exception of herbicidal compositions comprising paraquat and fullers earth.

2. The herbicidal composition as claimed in claim 1, comprising
a) from 0.15 to 48% by weight of one or more herbicides,
b) from 2 to 90% by weight of a carrier material and
c) from 0 to 97% by weight of a solvent.

3. The herbicidal composition as claimed in claim 1 or 2, wherein the herbicide is from the group of the herbicides with foliar action.

4. The herbicidal composition as claimed in any of claims 1 to 3, wherein the herbicide is from the group consisting of bilanafos, diquat, glufosinate-ammonium, glyphosate and paraquat.

5. The herbicidal composition as claimed in any of claims 1 to 4, wherein the herbicide is glufosinate-ammonium.

6. The herbicidal composition as claimed in any of claims 1 to 5, wherein the carrier materials are from the group consisting of aerogels, high-molecular-weight polyglycols and polymers based on acrylic acid, methacrylic acid and copolymers thereof.

7. The herbicidal composition as claimed in any of claims 1 to 6, which additionally comprises at least one substance from the group consisting of pre-emergence herbicides, plant growth regulators, fungicides, insecticides, safeners, nutrients, seed dressings and fertilizers.

8. The herbicidal composition as claimed in any of claims 1 to 7, which additionally comprises at least one additive from the group consisting of surfactants, wetting agents, emulsifiers, adjuvants, ammonium salts, preservatives, colorants, antifoams, tackifiers, solvents, buffer systems and UV stabilizers.

9. The herbicidal composition as claimed in claim 8, wherein the additive is from the group consisting of Genapol LRO®, ammonium sulfate and ammonium nitrate.

10. The use of herbicidal compositions as claimed in any of claims 1 to 9 for controlling undesirable harmful plants, which comprises applying the compositions by the pre-emergence method.

11. The use of herbicidal compositions as claimed in claim 10, wherein the compositions are used in crops of useful plants which are tolerant to the herbicidally active compounds contained in the compositions.

12. The use of herbicidal compositions as claimed in claim 11, wherein the compositions are used in crops of genetically modified useful plants.

13. A method for controlling undesirable harmful plants, wherein the post-emergence herbicides are used in the form of a herbicidal composition as claimed in any of claims 1 to 9 by the pre-emergence method.

## Revendications

1. Produits herbicides, **caractérisés par** une teneur efficace en un ou plusieurs herbicides appliqués en post-émergences et par une teneur en un matériau support parmi le groupe de la terre de Fuller, les aérogels, les polyglycols à poids moléculaire élevé et les polymérisats à base d'acide acrylique, d'acide méthacrylique et leur copolymérisats, les produits herbicides contenant du Paraquat et de la terre de Fuller devant en être exclus.

2. Produits herbicides selon la revendication 1, **caractérisés en ce qu'**ils comprennent
a) 0,15 à 48 % en poids d'un ou de plusieurs herbicides,
b) 2 à 90 % en poids d'un matériau support et
c) 0 à 97 % en poids d'un solvant.

3. Produits herbicides selon la revendication 1 ou 2, **caractérisés en ce qu'**ils proviennent d'un herbicide issu du groupe des herbicides efficaces contre les feuilles.

4. Produits herbicides selon l'une des revendications 1 à 3, **caractérisés en ce que** les herbicides proviennent du groupe Bilafanos, Diquat, glufosinate-ammonium, Glyphosate et Paraquat.

5. Produits herbicides selon l'une des revendications 1 à 4, **caractérisés en ce que** l'herbicide est le glufosinate-ammonium.

6. Produits herbicides selon l'une des revendications 1 à 5, **caractérisés en ce que** les matériaux support proviennent du groupe des aérogels, polyglycols à poids moléculaire élevé et polymérisats à base d'acide acrylique, d'acide méthacrylique et leur copolymérisats.

7. Produits herbicides selon l'une des revendications 1 à 6, **caractérisés en ce qu'**au moins une substance parmi le groupe des herbicides appliqués au sol, régulateurs de croissance végétale, fongicides, insecticides, safener, nutriments, agents de traitement des semences et engrais est présente.

8. Produits herbicides selon l'une des revendications 1 à 7, **caractérisés en ce qu'**au moins encore un additif parmi le groupe des tensioactifs, agents mouillants, émulsifiants, adjuvants, sels d'ammonium, conservateurs, colorants, agents anti-moussants, colles, solvants, systèmes de tampon et stabilisateurs d'UV est présent.

9. Produits herbicides selon la revendication 8, **caractérisés en ce que** l'additif provient du groupe Genapol LRO®, du sulfate d'ammonium et du nitrate d'ammonium.

10. Utilisation de produits herbicides selon l'une des revendications 1 à 9 pour lutter contre les plantes nuisibles indésirables, **caractérisée en ce que** les produits sont mis en oeuvre en post-émergence.

11. Utilisation de produits herbicides selon la revendication 10, **caractérisée en ce que** les produits sont utilisés dans les cultures de plantes vivrières, qui tolèrent les actifs herbicides contenus dans les produits.

12. Utilisation de produits herbicides selon la revendication 11, **caractérisée en ce que** les produits sont utilisés dans les cultures de plantes vivrières génétiquement modifiées.

13. Procédé de lutte contre les plantes nuisibles indésirables, **caractérisé en ce que** les herbicides appliqués en post-émergence sont utilisés sous la forme d'un produit herbicide selon l'une des revendications 1 à 9 en applications au sol.
